# EUROPEAN PATENT APPLICATION

(11) **EP 2 075 994 A1**
(43) Date of publication of application: **01.07.2009**
(21) Application number: 08170549.3
(22) Date of filing: 03.12.2008
(51) Int. Cl.: H04M 1/02, G06F 1/16

(54) **Portable electronic apparatus with automatic switching between two modes of operation**

(30) Priority: 25.12.2007 TW 96149829
(71) Applicant: E-Ten Information Systems Co., Ltd., Taipei 114 (TW)
(72) Inventor: Chuang, Meng-Chieh, Taipei 114 (TW)
(74) Representative: Bucher, Ralf Christian

(57) **Abstract**

A portable electronic apparatus is disclosed. The portable electronic apparatus comprises a shell, a first display module disposed on a first face of the shell, a second display module disposed on a second face of the shell, a detecting module, and a controlling module. The detecting module is used for detecting a first orientation and a second orientation of the portable electronic apparatus to determine an angle. Then, the controlling module compares the angle with a threshold angle and selectively controls the first displaying module to be in a first mode and the second displaying module to be in a second mode.

## Description

### BACKGROUND OF THE INVENTION

### 1. Field of the invention

The invention relates to a portable electronic apparatus, and more particularly, to a dual-monitor portable electronic apparatus whose two monitors can be switched according to the orientation of the portable electronic apparatus.

### 2. Description of the prior art

With the development of mobile communication technology, various kinds of mobile phones have been launched to the market and the functions of mobile phone are becoming more and more powerful currently. For example, a dual-monitor PDA mobile phone has gradually attracted ordinary consumers' attention. As implied by its name, the dual-monitor PDA mobile phone has a monitor on both of the front face and the back face respectively. One face of the dual-monitor PDA mobile phone, like an ordinary mobile phone, provides an operating interface and functions; the other face of the dual-monitor PDA mobile phone can be used as a PDA. Therefore, a user can freely choose the PDA function or the mobile phone function he/she wants to use by switching the front face to the back face of the PDA mobile phone.

However, when a user uses the PDA face of the conventional dual-monitor PDA mobile phone and wants to switch the PDA face to the mobile phone face, the switching of the two monitors is performed by a way of pressing a key or touching the monitor. Therefore, it is inconvenient for the user to use the conventional dual-monitor PDA mobile phone.

Therefore, the invention provides a portable electronic apparatus and operating method thereof to solve the above-mentioned problems.

### SUMMARY OF THE INVENTION

A scope of the invention is to provide a dual-monitor portable electronic apparatus. The two monitors of the portable electronic apparatus can be switched according to the orientations of the portable electronic apparatus.

An embodiment of the invention is a portable electronic apparatus. The portable electronic apparatus comprises a shell, a first displaying module, a second displaying module, a detecting module, and a controlling module. The shell has a first face and a second face. The first displaying module is disposed on the first face of the shell and the second displaying module is disposed on the second face of the shell. The detecting module is used for detecting a first orientation and a second orientation of the portable electronic apparatus and determining an angle according to the first orientation and the second orientation of the portable electronic apparatus. The controlling module is used for comparing the angle with a threshold angle and selectively controlling the first displaying module in a first mode and the second displaying module in a second mode.

In practical applications, once the portable electronic apparatus is powered on, the first orientation of the portable electronic apparatus is detected. If the angle is larger than the threshold angle, the first mode will be a shutdown mode or a sleep mode and the second mode will be a normal mode; if the angle is smaller than the threshold angle, the first mode will be a normal mode and the second mode will be a shutdown mode or a sleep mode.

Compared to the prior art, the portable electronic apparatus can automatically perform the switch between the two monitors according to the orientations of the portable electronic apparatus without any additional actions such as pressing a key or touching the monitor of the portable electronic apparatus. Herewith the user can use the dual-monitor portable electronic apparatus more easily and conveniently.

The advantage and spirit of the invention may be further understood by the following recitations together with the appended drawings.

### BRIEF DESCRIPTION OF THE APPENDED DRAWINGS

FIG. 1 shows a functional block diagram of the portable electronic apparatus according to the first embodiment of the invention.
FIG. 2(A) and FIG. 2(B) show an example of the portable electronic apparatus.
FIG. 3 shows a flow chart of the portable electronic apparatus operating method according to the second embodiment of the invention.
FIG. 4 shows a flow chart of the portable electronic apparatus operating method according to the third embodiment of the invention.

### DETAILED DESCRIPTION OF THE INVENTION

The invention provides a dual-monitor portable electronic apparatus. The two monitors of the portable electronic apparatus can be switched according to the orientation of the portable electronic apparatus. In fact, the dual-monitor portable electronic apparatus according to the invention can be a PDA mobile phone, a handheld gamer, or any other electronic apparatus with two monitors.

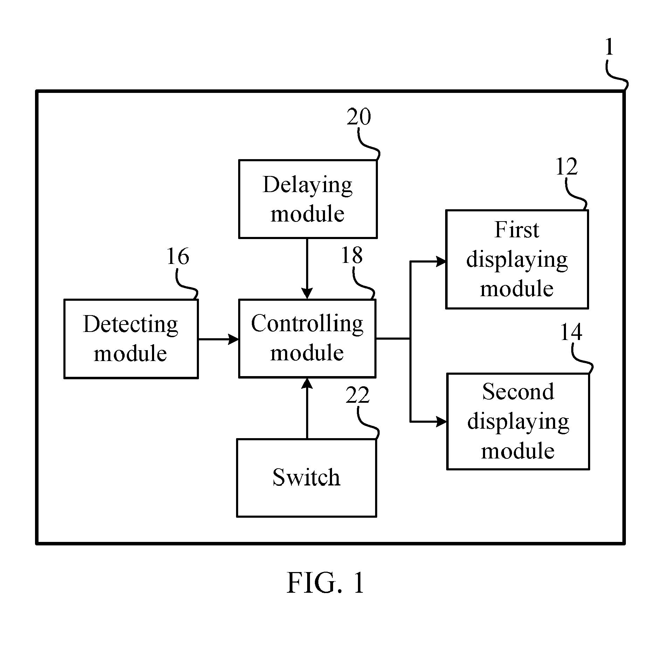

A first embodiment according to the invention is a dual-monitor portable electronic apparatus. The dual-monitor portable electronic apparatus has two monitors which are disposed on the front face and the back face of the shell of the portable electronic apparatus respectively. Please refer to FIG. 1. FIG. 1 shows the functional block diagram of the portable electronic apparatus. As shown in FIG. 1, the portable electronic apparatus 1 comprises a first displaying module 12, a second displaying module 14, a detecting module 16, a controlling module 18, a delaying module 20, and a switch 22. The detecting module 16, the delaying module 20, and the switch 22 are all coupled to the controlling module 18 respectively. And, the controlling module 18 is coupled to the first displaying module 12 and the second displaying module 14 to control the switch between the first displaying module 12 and the second displaying module 14.

Next, the above-mentioned modules of the portable electronic apparatus 1 will be introduced in detail respectively as follows.

In fact, the first displaying module 12 and the second displaying module 14 of the portable electronic apparatus 1 can be a LCD monitor or a displaying apparatus of other types respectively, so the portable electronic apparatus 1 can be a dual-monitor PDA mobile phone. In addition, the first displaying module 12 and the second displaying module 14 can be disposed on the front side and the back side of the portable electronic apparatus 1 respectively.

In the embodiment, the detecting module 16 is used for detecting a first orientation and a second orientation of the portable electronic apparatus 1 and determining an angle θ according to the first orientation and the second orientation of the portable electronic apparatus 1. In practical applications, the first orientation of the portable electronic apparatus 1 can be detected at a first time, and the second orientation of the portable electronic apparatus 1 can be detected at a second time. For example, once the portable electronic apparatus 1 is powered on, the detecting module 16 can detect an orientation of the portable electronic apparatus 1 and consider the detected orientation as the first orientation of the portable electronic apparatus 1. In fact, the detecting module 16 can be a magnetometer for sensing the orientation of the item.

The controlling module 18 is coupled to the detecting module 16, the first displaying module 12, and the second displaying module 14. The controlling module 18 is used for comparing the angle θ with a threshold angle θₜₕ and selectively controlling the first displaying module 12 in a first mode and the second displaying module 14 in a second mode.

In practical applications, the first mode and/or the second mode can be a normal operation mode, a shutdown mode, or a sleep mode. That is to say, for the dual-monitor PDA mobile phone, the controlling module 18 can control the switch of modes of two monitors among the normal operation mode, the shutdown mode, or the sleep mode.

Next, it will be discussed how the controlling module 18 of the portable electronic apparatus 1 controls the switch between the first displaying module 12 and the second displaying module 14 according to the angle θ determined by the detecting module 16.

In practical applications, the controlling module 18 can compare the angle θ determined according to the first orientation and the second orientation of the portable electronic apparatus 1 with a threshold angle θₜₕ to judge whether the angle θ is larger than the threshold angle θₜₕ. And, it is assumed that a user uses the first displaying module 12 of the portable electronic apparatus 1.

If the angle θ is larger than the threshold angle θₜₕ, it means that the user wants to switch the portable electronic apparatus 1 from the first displaying module 12 to the second displaying module 14. Namely, the user wants to use the second displaying module 14 instead of the first displaying module 12. Thus, the controlling module 18 will control the first displaying module 12 to be in the shutdown mode or the sleep mode, and the second displaying module 14 to be in the normal operation mode according to this comparing result generated by the controlling module 18.

On the contrary, if the angle θ is smaller than the threshold angle θₜₕ, it means that the user still wants to use the first displaying module 12 of the portable electronic apparatus 1 instead of switching the first displaying module 12 to the second displaying module 14. Thus, the controlling module 18 will control the first displaying module 12 to be in the normal operation mode, and the second displaying module 14 to be in the shutdown mode or the sleep mode according to this comparing result generated by the controlling module 18.

In practical applications, the significance of the above-mentioned threshold angle θₜₕ is to define the minimum orientation changing amount needed to switch the dual-monitor PDA mobile phone from one side to the other side. Therefore, when the angle θ is larger than the threshold angle θₜₕ, the controlling module 18 will perform the switch between the two monitors of the dual-monitor PDA mobile phone.

As shown in FIG. 1, the portable electronic apparatus 1 can further comprise the delaying module 20 and the switch 22. The main goal of setting the delaying module 20 and the switch 22 in the portable electronic apparatus 1 is to prevent the malfunction remissly caused by the user. However, in other applications, the portable electronic apparatus 1 without the delaying module 20 and the switch 22 is still fine to perform the above-mentioned switch between the two monitors.

The delaying module 20 is coupled to the controlling module 18, and is used for delaying a period of time before the controlling module 18 controls the first displaying module 12 to be in the first mode and the second displaying module 14 to be in the second mode. That is to say, before the portable electronic apparatus 1 performs the switch between the two monitors, a delay time is existed to prevent the unnecessary switches between the two monitors due to the malfunction of the user.

As to the switch 22, the switch 22 is also coupled to the controlling module 18. In fact, the switch 22 can be set on a button of the portable electronic apparatus 1 or on a soft key shown on the monitor of the portable electronic apparatus 1. In practical applications, in order to prevent the malfunction caused by the user in an unknown condition, the portable electronic apparatus 1 can be set only when the switch 22 is activated. Namely, only when the button is pressed or the soft key is touched, the controlling module 18 will control the auto-switch between the two monitors if the angle θ is larger than the threshold angle θₜₕ. Thus, if the switch 22 is not activated, the switch between the two monitors will never occur no matter how many times the user turns over the portable electronic apparatus 1. By doing so, the portable electronic apparatus 1 can achieve the effect of preventing the malfunction of the user.

In the following, a dual-monitor PDA mobile phone having a PDA face and a mobile phone face is taken as an example for explanation.

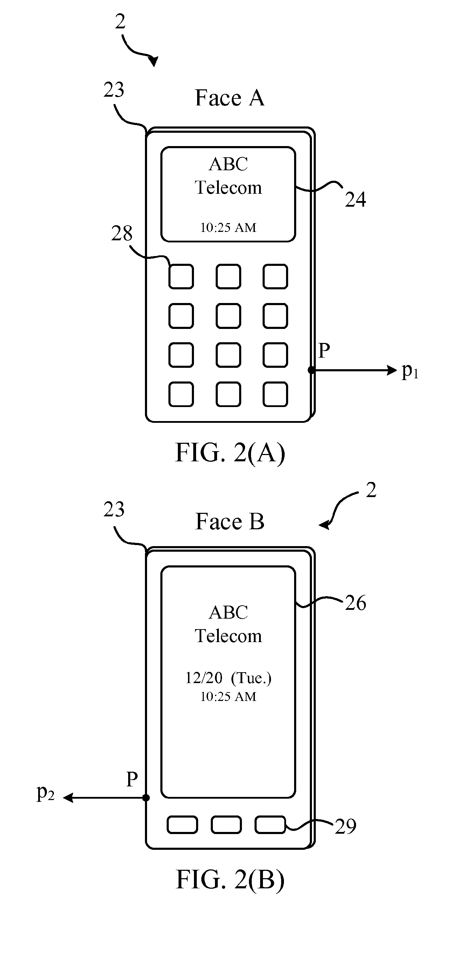

FIG. 2(A) shows a dual-monitor PDA mobile phone laid horizontally, and the mobile phone face is upward. As shown in FIG. 2(A) and FIG. 2(B), a mobile phone monitor 24 and mobile phone keys 28 are shown on the face A of the shell 23 of the dual-monitor PDA mobile phone 2, and a PDA monitor 26 and PDA keys 29 are shown on the face B of the shell 23 of the dual-monitor PDA mobile phone 2. At this time, the mobile phone monitor 24 on the upward face A is in a normal operation mode; the PDA monitor 26 on the downward face B is in a shutdown mode or a sleep mode. Therefore, the user can use the mobile phone keys 28 on the mobile phone face A to operate the mobile phone functions of the dual-monitor PDA mobile phone 2, for example, dialing the phone number.

FIG. 2(B) shows the dual-monitor PDA mobile phone turned over from the state of FIG. 2(A) and then the PDA face is upward. As shown in FIG. 2(B), the originally downward PDA face B of the dual-monitor PDA mobile phone 2 in FIG. 2(A) is turned over so that the PDA face B is upward in FIG. 2(B). And, the PDA monitor 26 on the PDA face B is also switched from the shutdown mode/the sleep mode in FIG. 2(A) to the normal operation mode in FIG. 2(B).

Similarly, the other face of the dual-monitor PDA mobile phone 2, namely the originally upward mobile phone face A in FIG. 2(A), is also turned over so that the mobile phone face A is downward in FIG. 2(B). And, the mobile phone monitor 24 on the mobile phone face A is also switched from the normal operation mode in FIG. 2(A) to the shutdown mode/the sleep mode in FIG. 2(B). Thus, the user can use the PDA keys 29 on the PDA face B to operate the PDA functions of the dual-monitor PDA mobile phone 2, for example, selecting to enter a hand-writing inputting mode.

In this embodiment, when the dual-monitor PDA mobile phone 2 is turned over, the reason why the switch between the two monitors automatically occurs is that the orientation changing amount generated by turning over the dual-monitor PDA mobile phone 2 is over the threshold needed for switching; namely, the angle θ between the first orientation and the second orientation of the dual-monitor PDA mobile phone 2 is larger than the threshold angle θₜₕ.

It is assumed that the threshold angle θₜₕ is 135° in this case. And, the angle θ between the orientation p2 of the point P on the dual-monitor PDA mobile phone 2 in FIG. 2(B) and the orientation p1 shown in FIG. 2(A) is 180°; namely θ >θₜₕ. It means that the user wants to switch from the originally used mobile phone face A to the PDA face B. Therefore, the dual-monitor PDA mobile phone 2 will switch the PDA monitor 26 on the PDA face B from the original shutdown mode/sleep mode to the normal operation mode for the user. In order to achieve the effect of saving power, the unused mobile phone face A of the dual-monitor PDA mobile phone 2 will also be switched from the original normal operation mode to the shutdown mode/sleep mode at the same time.

A second embodiment according to the invention is a method of operating a portable electronic apparatus. The portable electronic apparatus comprises a first displaying module and a second displaying module disposed on the front side and the back side of the portable electronic apparatus respectively. In fact, the first displaying module and the second displaying module can be a LCD monitor or a displaying apparatus of other types respectively.

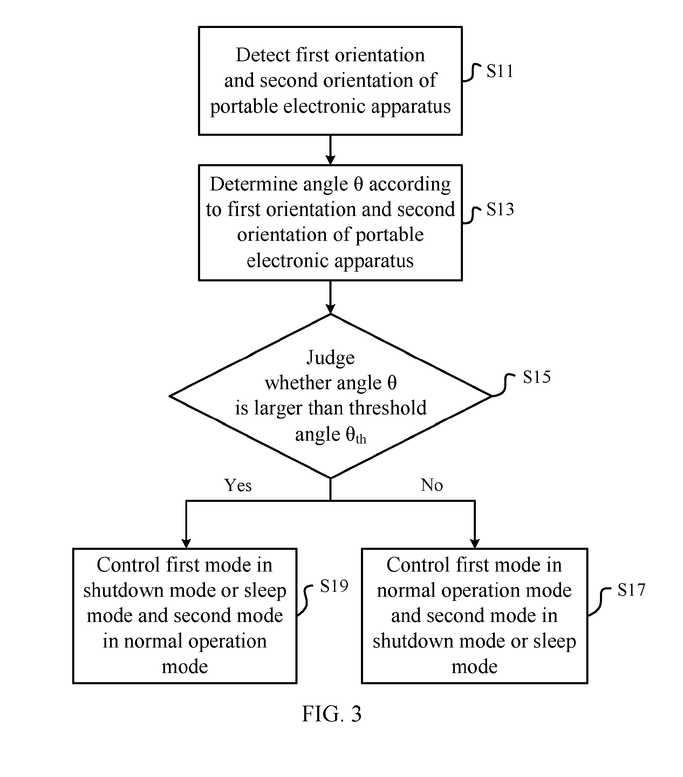

Please refer to FIG. 3. FIG. 3 shows the flowchart of the method. As shown in FIG. 3, once the portable electronic apparatus is powered on, the method performs step S11 to detect a first orientation and a second orientation of the portable electronic apparatus. Then, the method performs step S 13 to determine an angle θ according to the first orientation and the second orientation of the portable electronic apparatus. Afterward, the method performs step S15 to judge whether the angle θ is larger than a threshold angle θₜₕ to generate a judging result.

Next, the two possible judging results of step S15 will be discussed as follows. As shown in FIG. 3, if the judging result is that the angle θ is smaller than the threshold angle θₜₕ, namely the user still wants to use the first displaying module, the method will perform step S17 to control the first mode to be a normal operation mode and the second mode to be a shutdown mode or a sleep mode. On the other hand, if the judging result of step S15 is that the angle θ is larger than the threshold angle θₜₕ, namely the user wants to turn over the first displaying module to the second displaying module, the method will perform step S19 to control the first mode to be a shutdown mode or a sleep mode and the second mode to be a normal operation mode.

In practical applications, if the judging result of step S15 is that the angle θ is larger than the threshold angle θₜₕ, the method can perform another step to delay a period of time before controlling the first displaying module to be in the first mode and the second displaying module to be in the second mode. The reason why the method performs this step is to prevent the malfunction remissly caused by the user.

In addition, assume that the portable electronic apparatus further comprises a switch, for example, a button set on the dual-monitor PDA mobile phone or a soft key shown on the monitor of the dual-monitor PDA mobile phone. At this time, if the judging result of step S15 is that the angle θ is larger than the threshold angle θₜₕ, the method will perform step S 19 to control the first mode to be in the shutdown mode or the sleep mode and the second mode to be in the normal operation mode only when the switch is activated. Therefore, if the switch is not activated, the switch between the two monitors will never occur no matter how many times the user turns over the portable electronic apparatus. By doing so, the method can effectively prevent the unnecessary switches caused by the malfunction of the user.

A third embodiment according to the invention is a method of operating a portable electronic apparatus. The portable electronic apparatus comprises a first displaying module and a second displaying module disposed on the front side and the back side of the portable electronic apparatus respectively. In fact, the first displaying module and the second displaying module can be a LCD monitor or a displaying apparatus of other types respectively.

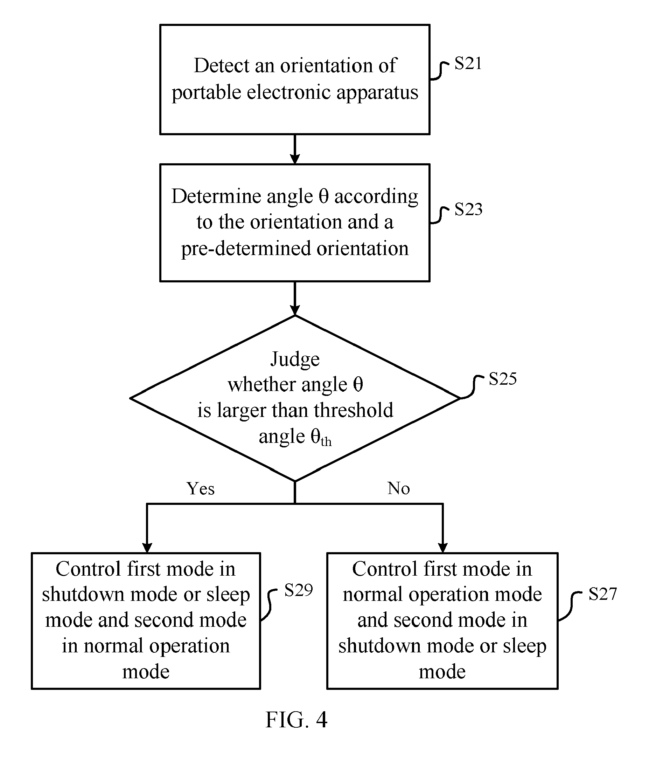

Please refer to FIG. 4. FIG. 4 shows the flowchart of the method. As shown in FIG. 4, the method performs step S21 to detect an orientation of the portable electronic apparatus. Then, the method performs step S23 to determine an angle θ according to the orientation of the portable electronic apparatus and a pre-determined orientation. In fact, the pre-determined orientation can be a default orientation set by the portable electronic apparatus or a user. Afterward, the method performs step S25 to judge whether the angle θ is larger than a threshold angle θₜₕ to generate a judging result.

Next, the two possible judging results of step S25 will be discussed as follows. As shown in FIG. 4, if the judging result is that the angle θ is smaller than the threshold angle θₜₕ, namely the user still wants to use the first displaying module, the method will perform step S27 to control the first mode to be a normal operation mode and the second mode to be a shutdown mode or a sleep mode. On the other hand, if the judging result of step S25 is that the angle θ is larger than the threshold angle θₜₕ, namely the user wants to turn over the first displaying module to the second displaying module, the method will perform step S29 to control the first mode to be a shutdown mode or a sleep mode and the second mode to be a normal operation mode.

Compared to the prior art, the portable electronic apparatus can automatically perform the switching between the two monitors according to the relative orientation of the portable electronic apparatus without additional actions such as pressing a key or touching the monitor. Herewith the user can use the dual-monitor portable electronic apparatus more easily and conveniently.

With the recitations of the preferred embodiment above, the features and spirits of the invention will be hopefully well described. However, the scope of the invention is not restricted by the preferred embodiment disclosed above. The objective is that all alternative and equivalent arrangements are hopefully covered in the scope of the appended claims of the invention. Accordingly, the above disclosure should be construed as limited only by the metes and bounds of the appended claims.

## Claims

1. A portable electronic apparatus, comprising:
a shell having a first face and a second face;
a first displaying module disposed on the first face of the shell;
a second displaying module disposed on the second face of the shell;
a detecting module for detecting a first orientation and a second orientation of the portable electronic apparatus to determine an angle; and
a controlling module coupled to the first displaying module, the second displaying module, and the detecting module, for comparing the angle with a threshold angle and selectively controlling the first displaying module to be in a first mode and the second displaying module to be in a second mode.

2. The portable electronic apparatus of claim 1, wherein if the angle is larger than the threshold angle, the first mode will be a shutdown mode or a sleep mode and the second mode will be a normal operation mode.

3. The portable electronic apparatus of claim 1, wherein if the angle is not larger than the threshold angle, the first mode will be a normal operation mode and the second mode will be a shutdown mode or a sleep mode.

4. The portable electronic apparatus of claim 1, further comprising:
a delaying module coupled to the controlling module, for delaying the controlling module switching the first displaying module to be in the first mode and the second displaying module to be in the second mode.

5. A method of operating a portable electronic apparatus, the portable electronic apparatus comprising a first displaying module on a first face of a shell and a second displaying module on a second face of the shell, the method comprising the steps of:
(a)detecting a first orientation and a second orientation of the portable electronic apparatus;
(b)determining an angle according to the first orientation and the second orientation of the portable electronic apparatus;
(c)judging whether the angle is larger than a threshold angle to generate a judging result; and
(d)selectively controlling the first displaying module to be in a first mode and the second displaying module to be in a second mode according to the judging result.

6. The portable electronic apparatus operating method of claim 5, wherein in step (a), the first orientation of the portable electronic apparatus is detected at a first time and the second orientation of the portable electronic apparatus is detected at a second time.

7. The portable electronic apparatus operating method of claim 5, wherein in step (d), if the angle is larger than the threshold angle, the first mode will be a shutdown mode or a sleep mode and the second mode will be a normal operation mode.

8. The portable electronic apparatus operating method of claim 5, wherein in step (d), if the angle is not larger than the threshold angle, the first mode will be a normal operation mode and the second mode will be a shutdown mode or a sleep mode.

9. A portable electronic apparatus, comprising:
a shell having a first face and a second face;
a first displaying module disposed on the first face of the shell;
a second displaying module disposed on the second face of the shell;
a detecting module for detecting an orientation of the portable electronic apparatus; and
a controlling module coupled to the first displaying module, the second displaying module, and the detecting module, for selectively controlling the first displaying module to be in a first mode according to the specific orientation.

10. The portable electronic apparatus of claim 9, wherein the controlling module compares an angle between the orientation and a first orientation of the portable electronic apparatus with a threshold angle.

11. The portable electronic apparatus of claim 10, wherein if the comparing result of the controlling module is that the angle is not larger than the threshold angle, the controlling module will control the first mode to be a normal operation mode.

12. The portable electronic apparatus of claim 9, wherein the first face of the shell is opposite to the second face of the shell.

13. The portable electronic apparatus of claim 9, further comprising:
a delaying module coupled to the controlling module, for delaying the controlling module switching the first displaying module to be in the first mode.

14. A method of operating a portable electronic apparatus, the portable electronic apparatus comprising a first displaying module on a first face of a shell and a second displaying module on a second face of the shell, the method comprising the steps of:
(a)detecting an orientation of the portable electronic apparatus; and
(b)selectively controlling the first displaying module to be in a first mode according to the specific orientation.

15. A method of operating a portable electronic apparatus, the portable electronic apparatus comprising a first displaying module on a first face of a shell and a second displaying module on a second face of the shell, the method comprising the steps of:
(a)detecting an orientation of the portable electronic apparatus;
(b)determining an angle according to the orientation and a first orientation of the portable electronic apparatus;
(c)judging whether the angle is larger than a threshold angle to generate a judging result; and
(d)selectively controlling the first displaying module to be in a first mode according to the judging result.
